# EUROPEAN PATENT APPLICATION

(11) **EP 3 002 112 A1**
(43) Date of publication of application: **06.04.2016**
(21) Application number: 15187950.9
(22) Date of filing: 01.10.2015
(51) Int. Cl.: B29C 70/52, B29C 67/00, B33Y 30/00

(54) **SELECTIVE ZONE TEMPERATURE CONTROL BUILD PLATE**

(30) Priority: 03.10.2014 US 201462059425 P; 21.11.2014 US 201414550419
(71) Applicant: Tyco Electronics Corporation, Berwyn, PA 19312 (US)
(72) Inventor: Naware, Gaurang N., Harrisburg, PA Pennsylvania 17102 (US)
(74) Representative: Johnstone, Douglas Ian

(57) **Abstract**

A build plate (10) for use in an additive manufacturing process, such as a three-dimensional printing process. The build plate (10) includes multiple elements (30) which have contact plates (32) and temperature control modules (34). The contact plates (32) form at least a portion of an upper surface (20) of the build plate (10) upon which an article (14) is fabricated. A controller (50) communicates with the temperature control modules (34) and controls the temperature of respective temperature control modules (34). The multiple elements (30) allow for selective temperature control of the upper surface (20) of the build plate, allowing portions of the article (14) to be selectively cooled or heated.

## Description

The present invention is directed to a build plate for use in additive manufacturing processes, such as, but not limited to, three-dimensional printing. In particular, the invention is directed to a build plate with multiple heating/cooling zones so that the temperature distribution and the thermal gradient over the surface of the build plate can be controlled.

It is common in metal and/or plastic parts manufacturing to produce large batch sizes and serial parts by injection molding or extrusion. The advantage of plastic injection molding is, in particular, owing to the highly accurate production of complex part geometries, whereby the functionality of the injection molding process optimally satisfies the requirements for the cost-effective and economical production of plastic parts.

However, the need for individual units and small batch sizes of plastic parts, with or without the requirement of being supplied within a short time frame and with properties similar to those of injection molding parts, is continuing to grow. Manufacturing processes exist for the production of such parts which are widely known under the term "prototyping." The production of such parts is generally based on the generation of the geometry from 3D data. These geometries are produced in a variety of forms by using the corresponding material, such as meltable layers of powder by heat input, e.g. with lasers, by generative systems such as printing processes, in various combinations of powder parts and using the "melt strand" process.

Various three-dimensional printing devices are currently available to produce parts from such 3D data. Three-dimensional (3D) printing refers to processes that create 3D objects based on digital 3D object models and a materials dispenser. In 3D printing, a dispenser moves in at least 2-dimensions and dispenses material in accordance to a determined print pattern. To a build a 3D object, a platform that holds the object being printed is adjusted such that the dispenser is able to apply many layers of material. In other words, a 3D object may be printed by printing many layers of material, one layer at a time. If the dispenser moves in 3-dimensions, movement of the platform is not needed. 3D printing features such as speed, accuracy, color options and cost vary for different dispensing mechanisms and materials.

A known system creates solid models or parts by depositing thermally solidifiable materials. In these processes, a flowable material is sequentially deposited on a substrate or on previously deposited thermoplastic material. The material solidifies after it is deposited and is thus able to incrementally create a desired form. Examples of thermally solidifiable systems include fused deposition modeling, wax jetting, metal jetting, consumable rod arc welding and plasma spraying. Such processes include Fused Deposition Modeling and Fused Filament Fabrication methods of 3D printing.

Since most deposition materials change density with temperature, these systems share the challenge of minimizing geometric distortions of the product prototypes that are produced by these density changes. Thermally solidifiable systems are subject to both warping or curling and thermal stress and shock due to plastic deformation and the like. Curling is manifest by a curvilinear geometric distortion which is induced into a prototype during a cooling period. The single largest contributor to such a geometric distortion (with respect to prototypes made by the current generation of rapid prototyping systems which utilize a thermally solidifiable material) is a change in density of the material as it transitions from a relatively hot flowable state to a relatively cold solid state.

Techniques exist to reduce the impact of curl. One technique involves the heating of the ambient build environment to reduce the possible temperature differences. Another technique is to carefully choose build materials which exhibit lowest possible thermal expansion coefficients. Yet another technique is to deposit the build material at the lowest possible temperature.

The art is replete with various solid modeling teachings. For instance, U.S. Pat. No. 5,121,329 to Crump, and assigned to the same Assignee as this Application, describes a fused deposition modeling system. While the Crump system incorporates a heated build environment, it requires that the deposited material be below its solidification temperature, as subsequent layers of material are added. U.S. Pat. No. 4,749,347 to Vilavaara and U.S. Pat. No. 5,141,680 to Almquist et al. describe rapid prototyping systems that incorporate flowable, thermally solidifying material. Both patents teach a build environment that is maintained at and below the solidification temperature of the extrusion material.

Another known system and method, disclosed in U.S. Pat. No. 5,866,058 to Batchelder et al., calculates a sequence for extruding flowable material that thermally solidifies so as to create the desired geometric shape. A heated flowable modeling material is then sequentially extruded at its deposition temperature into a build environment that maintains the volume in the vicinity of the newly deposited material in a deposition temperature window between the material's solidification temperature and its creep temperature. Subsequently, the newly extruded material is gradually cooled below its solidification temperature while maintaining temperature gradients in the geometric shape below a maximum value set by the desired part's geometric accuracy.

Another known system, as disclosed in the RepRap open source initiative (an initiative to develop a 3D printer that can print most of its own components), discloses a heated build platform. Printing on a heated bed allows the printed part to stay warm during the printing process to allow more even shrinking of the plastic as it cools below melting point and facilitate adhesion.

However, while the controlled build environment or the existing heated beds provide some control over the warping or curling of parts or articles made by these techniques, warping and internal thermal stresses of the fabricated parts or articles continues to be a problem.

It would, therefore, be beneficial to provide a build plate that provides control over temperature distribution. In particular, it would be beneficial to provide a build plate with multiple heating/cooling zones (selective zone heating) so that the temperature distribution and the thermal gradient over the surface of the build plate can be controlled, thereby allowing the thermal stresses of the parts or articles to be lessened or eliminated. The multiple heating/cooling zones also reduce or eliminate issues with adhesion, expansion and shrinkage, layer to layer bonding, delamination and stress relaxation.

The solution is provided by a build plate as disclosed herein which includes multiple elements which each have a contact plate and a temperature control module. The contact plates form at least a portion of an upper surface of the build plate upon which an article is fabricated. A controller communicates with the temperature control modules and controls the temperature of respective temperature control modules. The multiple elements allow for selective temperature control of the upper surface of the build plate, allowing portions of the article to be selectively cooled or heated.

The invention will now be described by way of example with reference to the accompanying drawings in which:
FIG. 1 is a plan view of a print head of a three-dimensional printing apparatus position proximate to an illustrative embodiment of a build plate of the present invention.
FIG. 2 is an enlarged perspective view of the build plate of FIG. 1.
FIG. 3 is a side view of the build plate of FIG. 2.
FIG. 4 is a cross-sectional view of the build plate taken along line 3-3 of FIG. 2.
FIG. 5 is an enlarged cross-sectional view of one element of the build plate.

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the preferred embodiments. Accordingly, the invention expressly should not be limited to such preferred embodiments illustrating some possible non-limiting combination of features that may exist alone or in other combinations of features; the scope of the invention being defined by the claims appended hereto.

Temperature distribution in a build platform or build plate plays an important role in building a part or article, in particular a part or article with tight geometric tolerances. Existing build plates lack control over temperature distribution resulting in an undesired thermal gradient in the build plates. The present invention solves the problems arising due to uncontrolled temperature distribution. Additionally, the present invention helps in controlling the adhesion, expansion and shrinkage, layer to layer bonding, stress relaxation, etc. of the part or article being built or fabricated.

The existing Fused Deposition Modeling and Fused Filament Fabrication methods used in three-dimensional printing have problems, such as, but not limited to, curling, warping, and delaminating of the part or article being built. Contributing to these problems is uncontrolled shrinkage and expansion of the part or article during manufacture. The uncontrolled shrinkage and expansion results from uncontrolled temperature distribution, thermal gradient, thermal shock, residual stresses etc. in the part or article being built. The uncontrolled shrinkage and expansion may be present regardless of the materials (for example, but not limited to thermally solidifiable materials, such as filled and unfilled polymers, high temperature thermoplastics or metals) used to build the part or article.

In order to overcome the problems of uncontrolled shrinkage and expansion, the smart build plate of the present invention has embedded temperature control mechanisms inside the build plate which are controlled electronically, which optimizes the temperature control of the part or article being built.

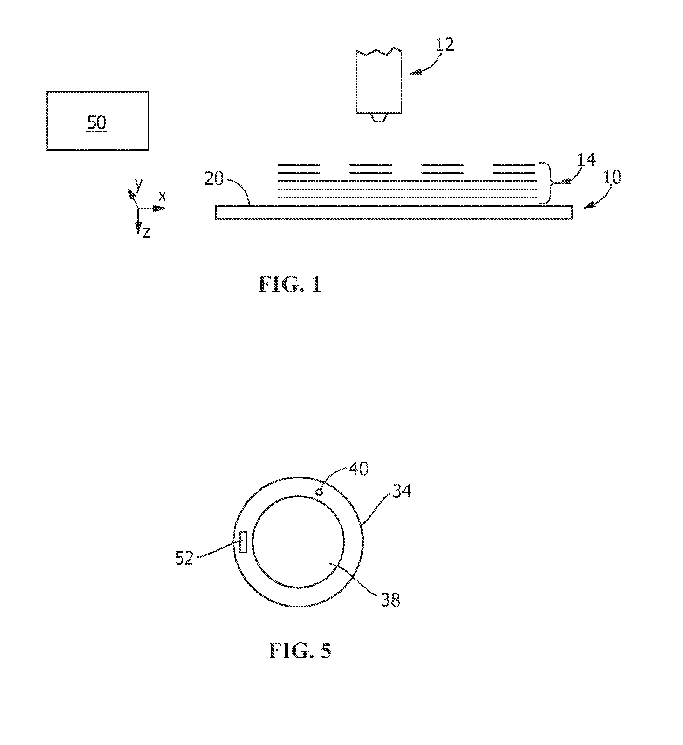

Referring to FIG. 1, an illustrative embodiment of the build platform or selective zone temperature control build plate 10 is shown proximate to a print head 12 of a three-dimensional printing apparatus. The three-dimensional printing apparatus can be of any type known in the industry, including, but not limited, the apparatus shown in copending U.S. Patent Application Serial Number 62/059,380, filed on October 3, 2014, which is hereby incorporate by reference in its entirety. While a three-dimensional printing apparatus, the build platform or build plate may be used with various additive manufacturing processes, which includes, but is not limited to, three-dimensional printing.

The three-dimensional printing apparatus builds three-dimensional parts or articles 14 by depositing material from the print head 12 onto the build plate 10. As deposition of the material occurs, the print head 12 is moved in the x,y plane and the build plate 10 is moved along the z-axis. However, the movement of the print head 12 and/or the movement of the build plate 10 may occur in other directions without departing from the scope of the invention.

To support the part or article 14 as it is being built, the build plate 10 has an upper surface 20 to which the material deposited from the print head 12 will adhere. In some embodiments, a substrate is mounted on top of the build plate 10 upon which the part or article 14 is built. Use of a substrate allows for easy removal of the part or article 14 from the apparatus after completion thereof.

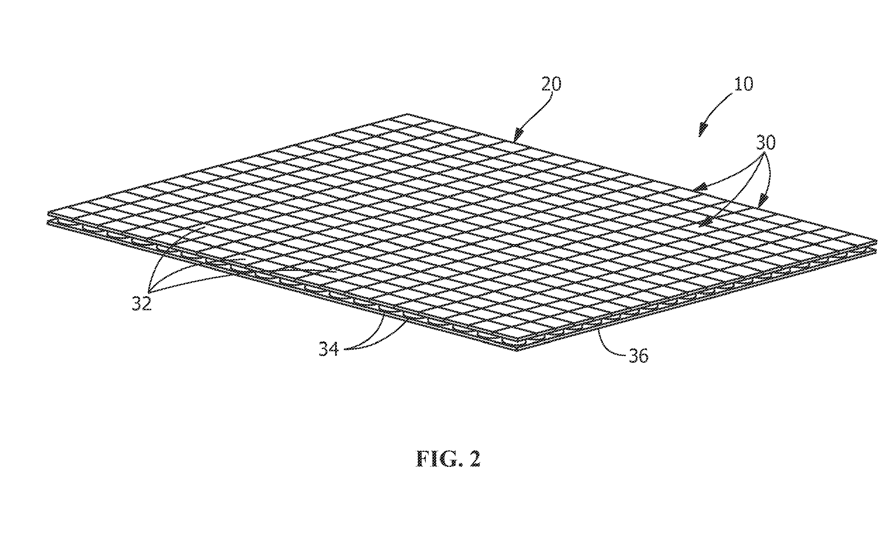

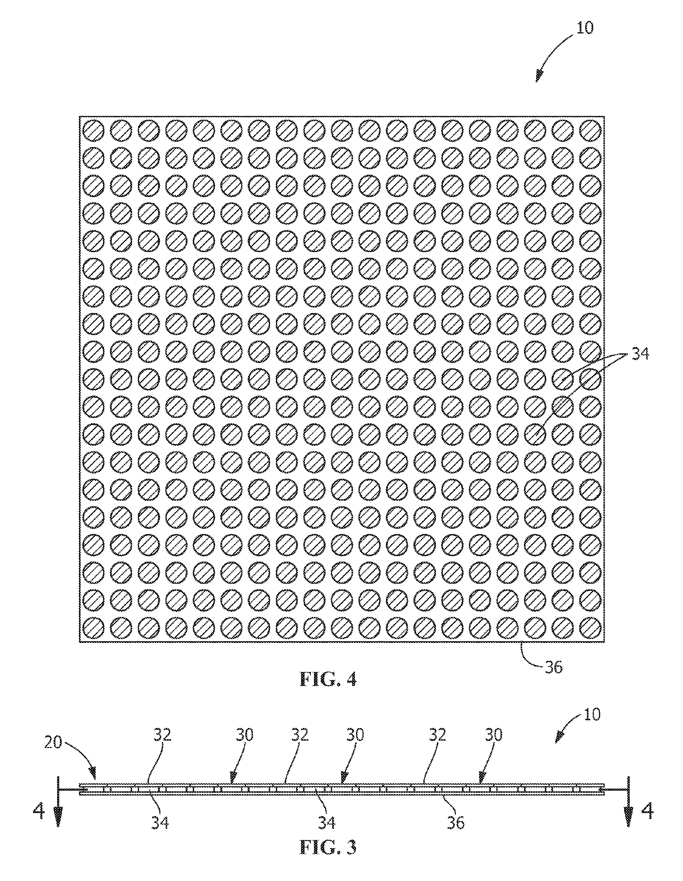

Referring to FIGS. 2 through 5, the build plate 10 includes multiple numbers of zones or modular elements 30 from 1 to N. Each modular element 30 consists of contact plate 32, temperature control module 34 and an insulating plate 36. The plurality of contact plates 32 of the multiple modular elements 30 form the upper surface 20, or at least a portion of the upper surface 20. The number of modular elements 30 used may vary based on many factors or parameters, including, but not limited to, the size of the build plate 10, the size and complexity of the part or article 14 being manufactured, the type of material used to fabricated the part or article 14 and/or the environment in which the build plate 10 is provided.

Each temperature control modules 34 is a device which has the ability to control the temperature thereof and consequently, control the temperature of its respective modular element 30. As shown in FIG. 5, the temperature control modules 34 include heating/cooling mechanisms 38 and temperature sensors 40. The heating/cooling mechanisms may be, but are not limited to, micro/nano heaters, coils, heat pipes, micro/nano channels, thermo-electric coolers, electromagnetic induction heating or a combination of them. The heating/cooling mechanisms may function according to the known principals such as, but not limited to, thermo-electric effect, Seback-Peltier effect, Thomson effect etc. or a combination thereof. The temperature sensors 40 are any known sensor which is cable of measuring the temperature in the temperature ranges in which the heating/cooling mechanisms operate. In the illustrative embodiment shown, each heating/cooling mechanism 38 and each temperature sensor 40 are housed inside respective temperature control modules 34 which are housed in the build plate 10.

Each of the temperature control modules 34 is in communication with and is controlled by a controller 50 (FIG. 1). The temperature control modules 34 may communicate with the controller 50 wirelessly or via fixed connections, such as, but not limited to, circuit paths or wires. The controller 50 will set the temperature in each temperature control module 34 based on a number of variable or factors, including, but not limited to, part geometry, dimensions, material, part fill (% of material fill), and center of gravity of the part. In order to optimize the performance of the build plate 10, the controller 50 will also analyze the thermal, mechanical, thermo-mechanical and rheological parameters and factors of the build plate 10, part or article 14, the build environment, the material from which the part is to be fabricated and/or the variable of the three-dimensional printing apparatus. The controller 50 will process all of the variables, inputs and parameters to determine the appropriate temperature in each module 34 based on the variables, inputs and parameters, which in turn determines the appropriate heating or cooling of the contact plates 32.

Alternatively, each of the temperature control modules 34 is in communication with and is controlled by a microcontroller/processor 52 (FIG. 5), which in the illustrative embodiment shown is positioned proximate to or in the temperature control module. However, the microcontroller/processor 52 may be positioned in other areas of the build plate 10 without departing from the scope of the invention. The heating/cooling mechanism 38 and the temperature sensor 40 may communicate with the microcontroller/processor 52 wirelessly or via fixed connections, such as, but not limited to, circuit paths or wires. The microcontroller/processor 52 will set the temperature in each temperature control module 34 based on a number of variable or factors, including, but not limited to, part geometry, dimensions, material, part fill (% of material fill), and center of gravity of the part. In order to optimize the performance of the build plate 10, the microcontroller/processor 52 will also analyze the thermal, mechanical, thermo-mechanical and rheological parameters and factors of the build plate 10, part or article 14, the build environment, the material from which the part is to be fabricated and/or the variable of the three-dimensional printing apparatus. The microcontroller/processor 52 will process all of the variables, inputs and parameters to determine the appropriate temperature in each module 34 based on the variables, inputs and parameters, which in turn determines the appropriate heating or cooling of the contact plates 32.

The materials from which the parts or articles 14 are made shrink at different rates depending upon their state (solid or molten). The challenge, therefore, is to control the rate of shrinkage while the parts or articles 14 are being cooled. In order to minimize the shrinkage, the temperature of the contact plates 32 of the top surface 20 of the build plate 10 are altered and varied from one modular element 30 to another modular element 30, thereby providing selective zone heating. In order to control the temperature of the contact plates 32, the microcontroller/processor 50 controls the temperature of each of the temperature control modules 34 to a temperature which optimizes the heating or cooling needed to control the heating or cooling of each of the contact plates 32 which in turn controls the heating or cooling of particular areas of the part or article 14 being built, thereby effectively controlling the thermal flow and the volumetric expansion or shrinkage of the part or article 14.

For example, if a solid strip is manufactured using a known build plate, which does not have modular elements 30, in an environment where one side of the strip is cooled faster than the other side, the side which cools faster also shrinks faster than the other side. Once the temperature of the cooled side is below the glass transition temperature of the material, the material on the cooled side becomes stiff and no longer pliable. Consequently due to non-uniform cooling, the strip bows to the side which cooled last. In case of more complex geometries various other problems like curling, warpage, part distortion etc. are observed.

However, if the same strip is made in the same environment using the smart build plate 10, the microcontroller/processor 50 processes all of the variables, inputs and parameters previously described and determines that additional heating is required from the heating/cooling mechanisms 38 of the temperature control modules 34 of the modular elements 30 which contact and/or or proximate to the side which tends to cool faster based on the environment. The microcontroller/processor 50 then communicates with the respective heating elements 38 to increase the heating is those modular elements 30. Is so doing, the modular elements 30 of the build plate 10 compensate for the environmental conditions, allowing both sides of the strip to cool at the same rate, thereby controlling the shrinkage of the material to prevent warping and other internal stress of the part or article 14.

In another example, due to the complexity of size of an object, various temperatures may be required for different elements 30. For such an example, the build plate may have: a first modular element having a first contact plate and a first temperature control module; a second modular element having a second contact plate and a second temperature control module; a third modular element having a third contact plate and a third temperature control module; and has a fourth modular element having a fourth contact plate and a fourth temperature control module. The controller: communicates with the first temperature control module to set the temperature of first temperature control module to a first temperature; communicates with the second temperature control module to set the temperature of second temperature control module to a second temperature which is different than the first temperature; communicates with the third temperature control module to set the temperature of third temperature control module to a third temperature which is different than the first and second temperatures; and communicates with the fourth temperature control module to set the temperature of fourth temperature control module to a fourth temperature which is different than the first, second and third temperatures.

The build plate described herein provides control over the temperature and temperature distribution across the build plate and consequently, across the part or article. In so doing, the build plate greatly reduces or eliminates the curling, warping, delamination, or distortion of the part being built.

The multiple zones or modular elements allow for selective control of the temperature zones, allowing for selective heating or cooling of the upper surface of the build plate. This allows the for portions or zones of the part or article being built to be selectively cooled or heated to provide for controlled volumetric expansion, controlled shrinkage, controlled adhesion, controlled layer to layer bonding, and controlled stress relaxation. Undesirable and unwanted thermal gradient across the build plate and the part, as is typical with known build plates is also eliminated. This allows the internal stresses with the part being built to be minimized or eliminated.

Because select areas of the build plate and the part can be heated or cooled, parts with high accuracy and resolution can be built, as the controlled heating and cooling can control the shrinkage and/or expansion of all areas of the part.

The multiple zones allows for selective control of the temperature zones to facilitate part removal from the build plate by minimizing the bonding between the part and the build plate.

While the invention has been described with reference to a preferred embodiment, it will be understood by those skilled in the art that various changes may be made and equivalents may be substituted for elements thereof without departing from the scope of the invention as defmed in the accompanying claims. In particular, it will be clear to those skilled in the art that the present invention may be embodied in other specific forms, structures, arrangements, proportions, sizes, and with other elements, materials, and components, without departing from the scope of the claims. One skilled in the art will appreciate that the invention may be used with many modifications of structure, arrangement, proportions, sizes, materials, and components and otherwise, used in the practice of the invention, which are particularly adapted to specific environments and operative requirements without departing from the scope of the claims. The presently disclosed embodiments are therefore to be considered in all respects as illustrative and not restrictive, the scope of the invention being defined by the appended claims, and not limited to the foregoing description or embodiments.

## Claims

1. A build plate (10) for use in an additive manufacturing process, the build plate (10) comprising:
multiple elements (30) each having a contact plate (32) and a temperature control module (34), the contact plates (32) form at least a portion of an upper surface (20) of the build plate (10) upon which an article (14) is fabricated;
a controller (50) which is arranged to communicate with the temperature control modules (34), the controller (50) is configured to control the temperature of respective temperature control modules (34);
wherein the multiple elements (30) are arranged to allow for selective temperature control of the upper surface (20) of the build plate (10), allowing portions of the article (14) to be selectively cooled or heated.

2. The build plate (10) as recited in claim 1, wherein the multiple elements (30) include insulating plates (36).

3. The build plate (10) as recited in claim 1 or 2, wherein each of the temperature control modules (34) includes a heating/cooling mechanism (38).

4. The build plate (10) as recited in any preceding claim, wherein each of the temperature control modules (34) includes a temperature sensor (40).

5. The build plate (10) as recited in claim 3 or 4, wherein each of the heating/cooling mechanisms (38) is selected from the group consisting of micro/nano heaters, coils, heat pipes, micro/nano channels, thermo-electric coolers, electromagnetic induction heating or a combination thereof.

6. The build plate (10) as recited in any preceding claim, wherein the controller (50) is a plurality microcontroller (52) positioned in each of the temperature control modules (34).

7. The build plate (10) as recited in claim 1, wherein the multiple elements (30) are modular.

8. The build plate (10) as recited in any preceding claim, wherein the multiple elements (30) include:
a first modular element (30) having a first contact plate (32) and a first temperature control module (34);
a second modular element (30) having a second contact plate (32) and a second temperature control module (34);
the controller (50) which is arranged to communicate with the first temperature control module (34) to set the temperature of first temperature control module (34) to a first temperature;
the controller (50) is arranged to communicate with the second temperature control module (34) to set the temperature of second temperature control module (34) to a second temperature which is different than the first temperature.

9. The build plate (10) as recited in claim 8, wherein the build plate (10) has a third modular element (30) having a third contact plate (32) and a third temperature control module (34), the controller (50) is arranged to communicate with the third temperature control module (34) to set the temperature of third temperature control module (34) to a third temperature which is different from the first and second temperatures.

10. The build plate (10) as recited in claim 9, wherein the build plate (10) has a fourth modular element (30) having a fourth contact plate (32) and a fourth temperature control module (34), the controller (50) is arranged to communicate with the fourth temperature control module (34) to set the temperature of fourth temperature control module (34) to a fourth temperature which is different from the first, second and third temperatures.
